# EUROPEAN PATENT SPECIFICATION

(11) **EP 3 454 410 B1**
(45) Date of publication and mention of the grant of the patent: **06.01.2021**
(21) Application number: 16901066.7
(22) Date of filing: 02.05.2016
(51) Int. Cl.: H01M 10/6571, B60K 1/04, B60L 1/00, B60L 58/21, B60L 58/27

(54) **LITHIUM ION BATTERY PACK**
LITHIUMIONENBATTERIEPACK
BLOC-BATTERIE AU LITHIUM-ION

(43) Date of publication of application: 13.03.2019
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: CATOLICO, Clarence Joy Villamor, Tokyo 105-8001 (JP); ISHIWA, Koji, Tokyo 105-8001 (JP)
(74) Representative: AWA Sweden AB
(86) International application number: PCT/JP2016/063596
(87) International publication number: WO 2017/191679

(56) References cited:
- WO-A1-2012/147137
- WO-A1-2013/161549
- DE-A1- 10 216 906
- JP-A- 2004 039 523
- JP-A- 2004 039 523
- JP-A- 2013 027 084

## Description

### FIELD

Embodiments described herein relate generally to a lithium-ion battery pack for starting an engine.

### BACKGROUND

2000/53 / EC (ELV Directive) enacted in September 2000 was issued to reduce the amount of waste during vehicle disposal and limit the use of harmful substances. Among these, lead was designated as a prohibited material, but at the same time, lead batteries were designated as an exception product. Lead batteries are still commonly used in vehicles, since nothing can completely replace the functions of lead batteries. However, recently, a movement to switch to lithium-ion batteries (hereinafter referred to as LiBs) has been gradually growing.

Replacing lead batteries with LiBs does not only have the merit of eliminating harmful metals, but other merits as well. As Europe, the United States and others are curbing allowable vehicular CO₂ emissions, a variety of electric power technologies and vehicular fuel efficiency improvements have been made. One example is micro hybrids using conventional combustion engines. Since micro hybrid engines are frequently restarted, batteries are required that are resistant to deep discharge. Also, for storing to the battery the brake energy during vehicle deceleration, a battery with high charging acceptancy is required. LiBs are superior to lead batteries in terms of resistance to deep discharge and charging acceptancy. Also, by switching from lead batteries to LiBs, the weight and size of vehicle systems can be reduced, since the output from a LiB at room temperature is higher than that from a lead battery.

### CITATION LIST

### PATENT LITERATURE

[Patent Literature 1] JP Pat. Appln. KOKAI Publ. No. 2004-063397
[Patent Literature 2] JP Pat. Appln. KOKAI Publ. No. 2008-021569
[Patent Literature 3] JP Pat. Appln. KOKAI Publ. No. 2003-223938

### SUMMARY

### TECHNICAL PROBLEM

A problem of LiBs is their universal tendency to increase in electrolyte viscosity and the immense increase in internal resistance at low temperatures due to the use of organic solvents in the electrolyte. As a consequence, the output from LiBs at low temperatures is lower than that from lead batteries, hence diminishing the engine's cold crank performance. By avoiding this through increasing the LiB capacity, LiBs lose their compactness and lightness benefit, which obstructs the popularization of LiBs.

The above-mentioned demonstrates that improving low temperature output performance of LiB-only systems in a time hereafter when lead batteries in vehicles are entirely eliminated poses a technical problem. As means for solving this problem, a method has been contrived by which output is raised through elevating the temperature by heating the battery using its own energy. A problem of this is, however, that the SOC (State of Charge) of the LiB drops and diminishes the LiB's output.

An object of the embodiments of the present invention is to provide a lithium-ion battery pack for starting an engine with improved low temperature output performance.

### PROBLEM TO BE SOLVED By THE PROBLEM BY THE INVENTION

According to one embodiment, a lithium-ion battery pack is for a vehicle (car). The lithium-ion battery pack comprises a first battery module, a second battery module, a heater, a first switch, a second switch, and a third switch. The first battery module comprises one or more lithium-ion batteries. The second battery module is connected in parallel with the first battery module and comprises one or more lithium-ion batteries. The heater is electrically connected to the second battery module and is disposed close to the first battery module and heats the first battery module. The first switch switches a power supply from the first battery module leading outward to ON or OFF, and switches a power supply from the first battery module leading outward for engine start to ON. The second switch switches a power supply from the second battery module leading outward to ON or OFF. The third switch switches a power supply from the second battery module to the heater to ON or OFF, and switches a power supply from the second battery module to the heater to ON before the engine start.

### BRIEF DESCRIPTION OF THE DRAWINGS

FIG. 1 is a schematic diagram showing an example lithium-ion battery pack according to an embodiment.
FIG. 2 is a table showing an example operation of the lithium-ion battery pack according to the embodiment.
FIG. 3 is a table showing another example operation of the lithium-ion battery pack according to the embodiment.
FIG. 4 is a table showing yet another example operation of the lithium-ion battery pack according to the embodiment.

### DETAILED DESCRIPTION

Embodiments hereafter will be described with reference to the drawings.

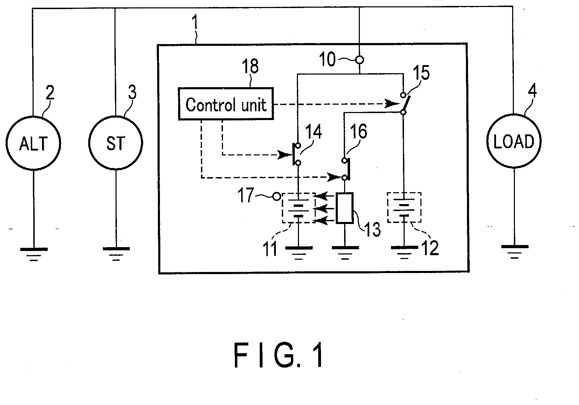

FIG. 1 is a schematic diagram showing an example lithium-ion battery pack 1 according to an embodiment.

The lithium-ion battery pack 1 is built into a vehicle mainly for the purpose of starting the engine and supplying power to an onboard auxiliary machine.

A positive-electrode terminal 10 of the lithium-ion battery pack 1 is connected to a network electrically connecting each element for the vehicle. In this manner, the lithium-ion battery pack 1 is electrically connected to an alternator 2, a starter 3, and a general load 4. The alternator 2 is a generator. The starter 3 is a motor used when starting the engine. The general load 4 is, for example, an onboard auxiliary machine including at least one of: an electrically-driven vehicle-installed equipment and an external accessory.

The lithium-ion battery pack 1 includes a first battery module 11, a second battery module 12, a heater 13, a first switch 14, a second switch 15, a third switch 16, a temperature sensor 17, and a control unit 18. These elements are electrically connected. The lithium-ion battery pack 1 accommodates these elements in a case.

The first battery module 11 is configured of one or more lithium-ion batteries (cells). The first battery module is, for example, 12 V. The positive electrode of the first battery module 11 is electrically connected to the positive-electrode terminal 10 via the first switch 14 (described further below). On the other hand, the negative electrode of the first battery module 11 is grounded.

The second battery module 12 is configured of one or more lithium-ion batteries. The power density or energy density of the second battery module 12 may be the same as or different from the power density or energy density of the first battery module 11; it is also not particularly limited. The second battery module 12 is, for example, 12 V. The second battery module 12 is connected in parallel with the first battery module 11. The positive electrode of the second battery module 12 is electrically connected to the positive-electrode terminal 10 via the second switch 15 (described further below). On the other hand, the negative electrode of the second battery module 12 is grounded.

The heater 13 is electrically connected to the second battery module 12. One end of the heater 13 is, for example, electrically connected to the positive electrode of the second battery module 12 via the third switch 16 (described further below). The other end of the heater 13 is grounded. The heater 13 is arranged close to the first battery module 11. In this manner, the heater 13 heats the first battery module 11. Note that the positional relationship of the heater 13 with respect to the first battery module 11 can be adjusted appropriately within the range where the heater 13 can heat the first battery module 11.

The first switch (relay) 14 is disposed between the positive electrode of the first battery module 11 and the positive-electrode terminal 10. The first switch 14 switches the electrical connection state between the positive electrode of the first battery module 11 and the positive-electrode terminal 10 to ON (valid) or OFF (invalid). In this manner, the first switch 14 switches the power supply from the first battery module 11 leading outward to ON or OFF. The ON/OFF switching of the first switch 14 will be described further below, but as an example, in order to start the engine, the first switch 14 switches the power supply from the first battery module 11 leading outward to ON.

The second switch (relay) 15 is disposed between the positive electrode of the second battery module 12 and the positive-electrode terminal 10. The second switch 15 switches the electrical connection state between the positive electrode of the second battery module 12 and the positive-electrode terminal 10 to ON or OFF. In this manner, the second switch 15 switches the power supply from the second battery module 12 leading outward to ON or OFF. The ON/OFF switching of the second switch 15 will be described further below.

The third switch (relay) 16 is disposed between one end of the heater 13 and the positive electrode of the second battery module 12. The third switch 16 switches the electrical connection state between the one end of the heater 13 and the positive electrode of the second battery module 12 to ON or OFF. In this manner, the third switch 16 switches the power supply to the heater 13 from the second battery module 12 to ON or OFF. The ON/OFF switching of the third switch 16 will be described further below, but as an example, before starting the engine, the third switch 16 switches the power supply to the heater 13 to ON.

The temperature sensor 17 is disposed in the vicinity of the first battery module 11. The temperature sensor 17 may or may not be in contact with the first battery module 11. The temperature sensor 17 measures the temperature of the first battery module 11.

The control unit 18 controls each element constituting the lithium-ion battery pack 1. For example, the control unit 18 switches the first switch 14 to ON or OFF. The control unit 18 switches the second switch 15 to ON or OFF. The control unit 18 switches the third switch 16 to ON or OFF. The control unit 18 receives information on the temperature (hereinafter referred to as temperature information) that is being measured by the temperature sensor 17. Based on the temperature information, the control unit 18 switches the state of each switch. This control of the control unit 18 based on temperature will be described further below.

Next, switching each of: the first switch 14, the second switch 15, and the third switch 16 to ON or OFF will be described.

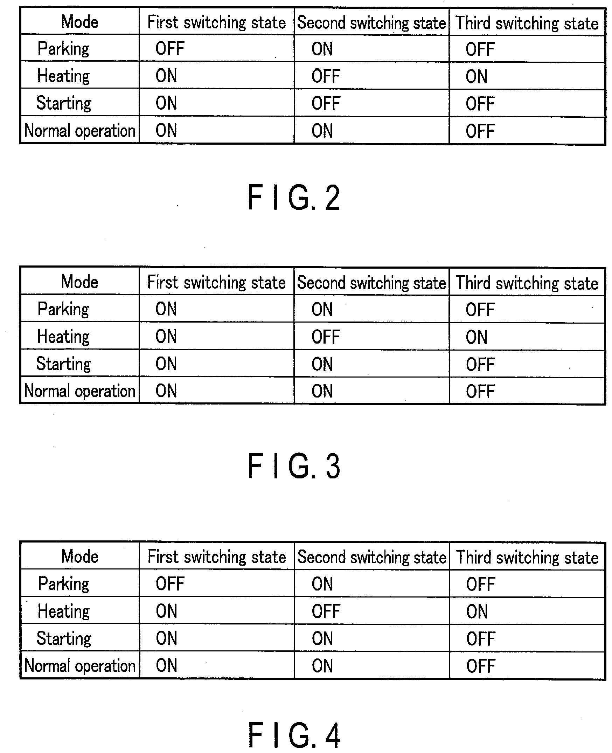

FIG. 2 is a table showing an example operation of the lithium-ion battery pack 1. It shows the state of each switch in each vehicle mode.

When the vehicle transitions from the state of parking to the state of running, the vehicle mode transitions in the order: parking mode, heating mode, starting mode, and normal operation mode shown in FIG. 2.

The parking mode is the mode where the engine is stopped.

The heating mode is the mode for heating the heater 13 prior to starting the engine, for example, after a trigger for engine start is input.

The starting mode is the mode during the time of starting the engine.

The normal operation mode is the mode after engine start, when the vehicle is traveling.

Next, the state of each switch in the parking mode will be described.

In the parking mode, the first switch 14 is OFF, the second switch 15 is ON, and the third switch 16 is OFF. In this manner, not the first battery module 11 but the second battery module 12 supplies power to the general load 4. In this manner, the general load 4 can be used even when the engine is stopped.

Next, the state of each switch in the heating mode will be described.

When transitioning from the parking mode to the heating mode, the state of each switch is switched as follows based on the control of the control unit 18:
The first switch 14 is switched from OFF to ON based the control of the control unit 18. In this manner, the first battery module 11 can supply electric power leading outward. The second switch 15 is switched from ON to OFF based on the control of the control unit 18. The third switch 16 is switched from OFF to ON based on the control of the control unit 18. In this manner, the second battery module 12 can supply electric power to the heater 13 without supplying electric power leading outward. As a result, the first battery module 11 is heated by the heater 13.

Next, the state of each switch in the starting mode will be described.

When transitioning from the heating mode to the starting mode, the state of each switch is switched as follows based on the control of the control unit 18:
The control unit 18 refers to the temperature information and determines whether or not the temperature of the first battery module 11 is equal to or higher than a threshold value. The threshold value is the temperature at which the output characteristic that the first battery module 11 can supply electric power capable of starting the starter 3 can be attained. The reason for this is that the output characteristic of the first battery module 11 increases according to the rise in temperature. The threshold value can be appropriately changed.

When the temperature of the first battery module 11 is below the threshold value, the control unit 18 maintains the heating mode. In other words, the third switch 16 maintains the ON state. When the temperature of the first battery module 11 is equal to or above the threshold value, the third switch 16 is switched from ON to OFF based on the control of the control unit 18. In this manner, the second battery module 12 does not supply power to the heater 13. The reason why the third switch 16 is switched from ON to OFF is that there is no need to further heat the first battery module 11 if the output characteristic of the first battery module 11 is sufficient to activate the starter 3. Note that the first switch 14 is maintained in the ON state and the second switch 15 is maintained in the OFF state. In this manner, the first battery module 11 supplies power to the starter 3 in the starting mode. As a result, the starter 3 starts, and the engine starts according to the operation of the starter 3. Note that the first battery module 11 can also supply power to the general load 4.

Next, the state of each switch in the normal operation mode will be described.

When transitioning from the starting mode to the normal operation mode, the state of each switch is switched as follows based on the control of the control unit 18:
The second switch 15 is switched from OFF to ON based on the control of the control unit 18. Note that the first switch 14 is maintained in the ON state and the third switch 16 is maintained in the OFF state. In this manner, the first battery module 11 and the second battery module 12 supply electric power to the general load 4. As a result, the general load 4 can be used during the normal operation mode.

Next, another example operation of the lithium-ion battery pack 1 will be described.

FIG. 3 is a table showing another example operation of the lithium-ion battery pack 1. Here, the aspects different from those of the example shown in FIG. 2 will be described.

In the parking mode, the first switch 14 of the example shown in FIG. 2 is OFF, but the first switch 14 of the example shown in FIG. 3 is ON. In this manner, not only the second battery module 12, but also the first battery module 11 can supply power to the general load 4 in the parking mode. As a result, the lithium-ion battery pack 1 of the example shown in FIG. 3 can supply power to the general load 4 for a longer time than the lithium-ion battery pack 1 of the example shown in FIG. 2.

In the starting mode, the second switch 15 in the example shown in FIG. 2 is OFF, but the second switch 15 in the example shown in FIG. 3 is ON. In this manner, the second battery module 12 can supply electric power to the general load 4 in the starting mode. As a result, electric power is supplied in a stable manner from the lithium-ion battery pack 1 to the general load 4.

FIG. 4 is a table showing yet another example operation of the lithium-ion battery pack 1. Here, the aspects different from those of the example shown in FIG. 2 will be described.

In the starting mode, the second switch 15 in the example shown in FIG. 2 is OFF, but the second switch 15 in the example shown in FIG. 4 is ON, similar to the example shown in FIG. 3.

According to the embodiment, even at low temperatures, the output performance of the lithium-ion battery pack 1 does not diminish. Therefore, the lithium-ion battery pack 1 can prevent a diminishing of the cold crank performance of the engine. In this manner, according to this embodiment, a lithium-ion battery pack 1 for starting an engine with improved low-temperature output performance can be provided.

Note that the capacity of the second battery module 12 suffices to supply electric power to the heater 13 for a predetermined period of time in order to raise the temperature of the first battery module 11 to the threshold value (predetermined temperature). In this manner, the heater 13 is supplied with electric power from the second battery module 12 in a stable manner to heat the first battery module 11.

Next, several modified examples of the present embodiment will be described.

First, a first modified example will be described.

The first battery module 11 and the second battery module 12 are composed of battery modules having similar voltage characteristics. The power density of the first battery module 11 is different from that of the second battery module 12. Specifically, the first battery module 11 has a higher power density than the second battery module 12. A high-power density means that the instantaneous energy output performance is high. In the example, the resistance value of the first battery module 11 is lower than that of the second battery module 12.

The battery module supplying power to the starter 3 at engine startup requires instantaneous output within a short time, for example, 1 second or less. The first battery module 11 configured as stated above can supply instantaneous output within a shorter time than the second battery module 12.

According to the first modified example, even at low temperatures, the lithium-ion battery pack 1 can start the engine efficiently.

Next, a second modified example will be described.

The first battery module 11 and the second battery module 12 are composed of battery modules having similar voltage characteristics. The energy density of the first battery module 11 is different from that of the second battery module 12. Specifically, the second battery module 12 has a higher energy density than the first battery module 11. A high-energy density means that the continuous energy output performance is high.

The battery module supplying power to the heater 13 requires continuous output until the temperature of the first battery module 11 reaches the predetermined temperature. The second battery module 12 configured as stated above can supply electric power with a high-energy density to the heater 13. As a result, the heater 13 can heat the first battery module 11 in a stable manner.

According to the second modified example, even at low temperatures, the lithium-ion battery pack 1 can efficiently start the engine.

Note that the second modified example may be combined with the first modified example. In other words, the first battery module 11 is configured to have a higher power density than the second battery module 12, and the second battery module 12 is configured to have a higher energy density than the first battery module 11. In this case, the lithium-ion battery pack 1 can attain both the effect described in the first modified example, and the behavior and effect explained in the second modified example.

Next, a third modified example will be described.

The first switch 14, the second switch 15, and the third switch 16 may be controlled by a control unit different from the control unit 18 included in the lithium-ion battery pack 1. As an example, the first switch 14, the second switch 15, and the third switch 16 may be controlled by another control unit (not shown) that controls the elements built into the vehicle. For example, one or two of: the first switch 14, the second switch 15, and the third switch 16 may be controlled by the control unit 18. On the other hand, one or two of: the first switch 14, the second switch 15, and the third switch 16 not controlled by the control unit 18 may be controlled by another control unit.

### (Working example)

Next, a working example of the lithium battery module (battery) 1 described in the present embodiment will be described.

High-power-type cells a (10 Ah, 2.4 V) and high-capacity-type cells b (40 Ah, 2.4 V) are used to prepare a first battery module 11 (10 Ah) in which five of the cells a are connected in series, and a second battery module 11 (40 Ah) in which five of the cells b are connected in series.

The first switch (relay) 14 is connected to the first battery module 11, the second switch (relay) 15 is connected to the second battery module 12, and the first battery module 11 and the second battery module 12 are connected in parallel.

A 1000 W plate heater 13 is disposed such that the surface of the plate heater 13 covers the cell surface of the first battery module 11. The heater 13 is connected via the third switch (relay) 16 to the second battery module 12 to enable drawing power from the second battery module 12. The so-configured lithium-ion battery pack 1 was examined.

The lithium-ion battery pack 1 is connected to a network connected to the alternator 2, the starter 3 and the general load 4 to start the engine.

As comparative example, a battery C was examined, in which five high-capacity type cells c with a total equal capacity of 50 Ah and 2.4 V are connected in series.

The scenario is assumed where both batteries are fully charged, and discharged from a state of -30°C to start the engine.

In the initial state (aforementioned parking mode), the first switch 14 is OFF, the second switch 15 is ON, and the third switch 16 is OFF.

First, in order to heat, the first switch 14 is switched to ON, the electric power supply to the general load 4 is enabled, the second switch 15 is switched to OFF, and the third switch 16 is switched to ON so that the first battery module 11 is heated for 60 seconds. It was estimated that by heating, the temperature of the first battery module 11 went from -30°C to -10°C. Thus, switching the third switch 16 to OFF and the first switch 14 to ON to start up the starter 3 of the engine enables discharging from the first battery module 11 for about 5 seconds at 500 A, thereby starting the engine.

On the other hand, the current dischargeable from the state of -30°C of the battery C in the comparative example is approximately 200-300 A, which is not enough to start the engine.

In conclusion, by causing, as described above, the second battery module 12 with the high-energy density to heat up the first battery module 11 with the high-power density, cold cranking is even possible with a battery having a similar energy amount (50 Ah, 12 V).

The scope of protection is defined by the appended claims. Features describing details of further embodiments are defined in the dependent claims. Subject matter not covered by the claims is not according to the invention.

## Claims

1. A lithium-ion battery pack for a vehicle, comprising:
a first battery module comprising one or more lithium-ion batteries;
a second battery module connected in parallel with the first battery module and comprising one or more lithium-ion batteries;
a heater which is electrically connected to the second battery module and disposed close to the first battery module and heats the first battery module;
a first switch which switches a power supply from the first battery module leading outward to ON or OFF, and switches a power supply from the first battery module leading outward for engine start to ON;
a second switch which switches a power supply from the second battery module leading outward to ON or OFF; and
a third switch which switches a power supply from the second battery module to the heater to ON or OFF, and switches a power supply from the second battery module to the heater to ON before the engine start.

2. The lithium-ion battery pack according to claim 1, wherein:
the first battery module and the second battery module are composed of battery modules having similar voltage characteristics; and
the first battery module has a higher power density than the second battery module.

3. The lithium-ion battery pack according to claim 1, wherein:
the first battery module and the second battery module are composed of battery modules having similar voltage characteristics; and
the second battery module has a higher energy density than the first battery module.

4. The lithium-ion battery pack according to claim 1, wherein:
in a parking mode, the first switch is ON or OFF, the second switch is ON, and the third switch is OFF;
in a heating mode, the first switch is ON, the second switch is OFF, and the third switch is ON;
in a starting mode, the first switch is ON, the second switch is ON or OFF, and the third switch is OFF; and
in a normal operation mode, the first switch is ON, the second switch is ON, and the third switch is OFF.

5. The lithium-ion battery pack according to claim 1, wherein:
capacity of the second battery module suffices to supply electric power to the heater for a predetermined period of time in order to raise temperature of the first battery module to a predetermined value.

## Patentansprüche

1. Lithiumionenbatteriepack für ein Fahrzeug, das umfasst:
ein erstes Batteriemodul, das eine oder mehrere Lithiumionenbatterien umfasst;
ein zweites Batteriemodul, das mit dem ersten Batteriemodul parallelgeschaltet ist und eine oder mehrere Lithiumionenbatterien umfasst;
ein Heizelement, das elektrisch mit dem zweiten Batteriemodul verbunden ist und nahe an dem ersten Batteriemodul angeordnet ist und das erste Batteriemodul heizt;
einen ersten Schalter, der eine Leistungsversorgung von dem ersten Batteriemodul, die nach außen führt, auf EIN oder AUS schaltet und eine Leistungsversorgung von dem ersten Batteriemodul, die nach außen führt, für den Motorstart auf EIN schaltet;
einen zweiten Schalter, der eine Leistungsversorgung von dem zweiten Batteriemodul, die nach außen führt, auf EIN oder AUS schaltet, und
einen dritten Schalter, der eine Leistungsversorgung von dem zweiten Batteriemodul zu dem Heizelement auf EIN oder AUS schaltet und eine Leistungsversorgung von dem zweiten Batteriemodul zu dem Heizelement vor dem Motorstart auf EIN schaltet.

2. Lithiumionenbatteriepack nach Anspruch 1, wobei:
das erste Batteriemodul und das zweite Batteriemodul aus Batteriemodulen bestehen, die ähnliche Spannungskennlinien aufweisen; und
das erste Batteriemodul eine höhere Leistungsdichte aufweist als das zweite Batteriemodul.

3. Lithiumionenbatteriepack nach Anspruch 1, wobei:
das erste Batteriemodul und das zweite Batteriemodul aus Batteriemodulen bestehen, die ähnliche Spannungskennlinien aufweisen; und
das zweite Batteriemodul eine höhere Energiedichte aufweist als das erste Batteriemodul.

4. Lithiumionenbatteriepack nach Anspruch 1, wobei:
in einem Parkmodus der erste Schalter EIN oder AUS ist, der zweite Schalter EIN ist und der dritte Schalter AUS ist;
in einem Heizmodus der erste Schalter EIN ist, der zweite Schalter AUS ist und der dritte Schalter EIN ist;
in einem Startmodus der erste Schalter EIN ist, der zweite Schalter EIN oder AUS ist und der dritte Schalter AUS ist; und
in einem normalen Betriebsmodus, der erste Schalter EIN ist, der zweite Schalter EIN ist und der dritte Schalter AUS ist.

5. Lithiumionenbatteriepack nach Anspruch 1, wobei:
die Kapazität des zweiten Batteriemoduls ausreicht, um das Heizelement während eines vorbestimmten Zeitraums mit Leistung zu versorgen, um die Temperatur des ersten Batteriemoduls auf einen vorbestimmten Wert zu erhöhen.

## Revendications

1. Bloc-batterie au lithium-ion pour un véhicule, comprenant :
un premier module de batterie comprenant une ou plusieurs batteries au lithium-ion ;
un deuxième module de batterie relié en parallèle au premier module de batterie et comprenant une ou plusieurs batteries au lithium-ion ;
un élément chauffant qui est électriquement relié au deuxième module de batterie et disposé à proximité du premier module de batterie et chauffe le premier module de batterie ;
un premier commutateur qui commute une alimentation d'énergie depuis le premier module de batterie dirigée vers l'extérieur à ON ou OFF, et commute une alimentation d'énergie depuis le premier module de batterie dirigée vers l'extérieur pour un démarrage de moteur à ON ;
un deuxième commutateur qui commute une alimentation d'énergie depuis le deuxième module de batterie dirigée vers l'extérieur à ON ou OFF ; et
un troisième commutateur qui commute une alimentation d'énergie depuis le deuxième module de batterie vers l'élément chauffant à ON ou OFF, et commute une alimentation d'énergie depuis le deuxième module de batterie vers l'élément chauffant à ON avant le démarrage de moteur.

2. Bloc-batterie au lithium-ion selon la revendication 1, dans lequel :
le premier module de batterie et le deuxième module de batterie sont composés de modules de batterie ayant des caractéristiques de tension similaires ; et
le premier module de batterie a une densité d'énergie supérieure à celle du deuxième module de batterie.

3. Bloc-batterie au lithium-ion selon la revendication 1, dans lequel :
le premier module de batterie et le deuxième module de batterie sont composés de modules de batterie ayant des caractéristiques de tension similaires ; et
le deuxième module de batterie a une densité d'énergie supérieure à celle du premier module de batterie.

4. Bloc-batterie au lithium-ion selon la revendication 1, dans lequel :
dans un mode de stationnement, le premier commutateur est ON ou OFF, le deuxième commutateur est ON, et le troisième commutateur est OFF ;
dans un mode de chauffage, le premier commutateur est ON, le deuxième commutateur est OFF, et le troisième commutateur est ON ;
dans un mode de démarrage, le premier commutateur est ON, le deuxième commutateur est ON ou OFF, et le troisième commutateur est OFF ; et
dans un mode de fonctionnement normal, le premier commutateur est ON, le deuxième commutateur est ON, et le troisième commutateur est OFF.

5. Bloc-batterie au lithium-ion selon la revendication 1, dans lequel :
une capacité du deuxième module de batterie suffit à fournir de l'énergie électrique à l'élément chauffant pendant une période de temps prédéterminée afin d'augmenter une température du premier module de batterie à une valeur prédéterminée.
